(19) Europäisches Patentamt
European Patent Office
Office européen des brevets

(11) Publication number: **0 135 904**
**B1**

(12) **EUROPEAN PATENT SPECIFICATION**

(45) Date of publication of patent specification: **29.07.87**

(21) Application number: **84111055.4**

(22) Date of filing: **17.09.84**

(51) Int. Cl.$^4$: **C 08 L 67/02,** C 08 L 69/00 // (C08L67/02, 69:00, 51:04),(C08L69/00, 67:02, 51:04)

(54) **Polyethylene terephthalate/polycarbonate blends having a low level of warpage.**

(30) Priority: **26.09.83 US 536066**

(43) Date of publication of application: **03.04.85 Bulletin 85/14**

(45) Publication of the grant of the patent: **29.07.87 Bulletin 87/31**

(84) Designated Contracting States: **DE FR GB IT**

(56) References cited: **GB-A-2 041 946**

(73) Proprietor: **MOBAY CORPORATION**
**Penn Lincoln Parkway West**
**Pittsburgh, Pennsylvania 15205 (US)**

(72) Inventor: **Chung, James Y.J.**
**745 Highland Avenue**
**New Martinsville West Virginia 26155 (US)**
Inventor: **Witman, Mark W.**
**1856 Taper Drive**
**Pittsburgh Pennsylvania 15249 (US)**

(74) Representative: **Gremm, Joachim, Dr. et al**
**Bayer AG c/o Zentralbereich Patente, Marken und Lizenzen**
**D-5090 Leverkusen 1, Bayerwerk (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of the Invention

The invention relates to thermoplastic compositions and, in particular, to blends containing poly(ethylene terephthalate), polycarbonate, an elastomeric graft and talc.

Summary of the Invention

The present invention is directed to thermoplastic molding compositions comprising poly(ethylene terephthalate), aromatic polycarbonate, a certain graft modified rubber, and an amount of added talc sufficient to control the warpage of the composition and to maintain a high level of impact strength.

Background of the Invention

Compositions consisting of aromatic polyester, polycarbonate and butadiene based core-shell polymers were disclosed in U.S. Patent 3,864,428. U.S. Patent 4,180,494 is noted to disclose similar systems which are said to offer improved solvent resistance. Compositions containing a graft copolymer of alkyl acrylate and/or alkyl methacrylate in combination with a saturated polyester resin and a polycarbonate resin have been disclosed in Japanese Kokai 53-129246.

Talc, in combination with silica, whereby the latter is shown to be essential has been disclosed in U.S. Patent 4,140,669 to bring about a reinforcement and warp resistance in poly(ethylene terephthalate)/poly(butyleneterephthalate) blends. U.S. 3,975,355 is noted to disclose sheets containing PET, polycarbonate and silica. The HDT of poly(butyleneterephthalate in contrast to that of polyethyleneterephthalate is disclosed to be improved upon the addition of talc in accordance with U.S. Patent 3,859,246.

U.S. Patent 4,299,928 is noted to teach compositions comprising a polycarbonate resin and an acrylic rubber interpolymer composite.

Importantly, the compositions disclosed in the above-mentioned U.S. Patent 3,864,428 were found to warp Mo-2459 upon post-molding heat treatment, such as upon automotive off-line painting.

The present invention relates to the field of thermoplastic molding compositions comprising a polyethyleneterephthalate an aromatic polycarbonate, a graft modified rubber and an additive amount of finely divided talc sufficient to control the warpage of articles molded therefrom, yet have substantially no effect on the level of their impact strength.

The invention refers to a thermoplastic moulding composition comprising a blend of

(i) 30 to 89.5% of a high molecular weight thermoplastic poly-(ethylene terephthalate) resin,

(ii) 5 to 61.5% of a high molecular weight thermoplastic aromatic polycarbonate resin,

(iii) 5 to 50% of a graft modified butadiene based rubber having a glass transition temperature below about 10°C, and

(iv) 0.1 to 4% of talc,

said percentages being relative to the weight of said blend, with the proviso that the blend does not include polybutylene terephthalate resins and polyethylene terephthalate/polybutylene terephthalate block copolyesters.

Detailed Description of the Invention and its Preferred Embodiments

In the present context, the term polyethylene terephthalate (PET) means both the homopolymer of ethylene glycol and terephthalic acid as well as copolymers wherein some (i.e. up to 30%) of the ethylene glycol resins were replaced by ether diol residues having 3 to 8 carbon atoms or by $C_6$—$C_{15}$ cycloaliphatic diols, or by $C_1$—$C_{21}$ aromatic diols.

Examples of such additional diols ("codoils") include 3-methylpentanediol-(2,4), 2-methylpentanediol-(1,4), 2,2,4-trimethylpentanediol-(1,3), 2-ethylhexanediol-(1,3), 2,2-diethylpropanediol-(1,3), hexanediol-(1,3), 1,4-di-(β-hydroxyethoxy)-benzene, 2,2-bis-(4-hydroxycyclohexyl)-propane, 2,4-dihydroxy-1,1,3,3-tetramethyl-cyclobutane, 2,2-bis-(3-β-hydroxyethoxyphenyl)-propane and 2,2-bis-(4-hydroxypropoxy-phenyl)propane.

Typical examples of the diol include polymethylene-α,ω-diols such as trimethylene glycol, tetramethylene glycol and hexamethylene glycol, neopentyl glycol, cyclohexane dimethylol, tricyclodecane dimethylol, 2,2-bis-(4-β-hydroxyethoxyphenyl)-propane, 4,4'-bis-(β-hydroxyethoxy)-diphenylsulfone, and diethylene glycol.

Further included within the scope are copolymers wherein some (up to about 15%) of the terephthalic acid residues are replaced by other dicarboxylic acid residues including isophthalic acid, naphthalenedicarboxylic acid, diphenylether dicarboxylic acid, diphenyldicarboxylic acid, diphenylsulfone dicarboxylic acid and diphenoxyethane dicarboxylic acid, as well as by aliphatic dicarboxylic acids such as succinic acid, adipic acid and sebacic acid.

The preferred polyethylene terephthalate resins are characterized in that their structure comprises units of the general formula

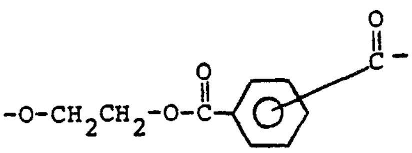

The polyesters may be branched by incorporating trihydric or tetrahydric alcohols or tribasic or tetrabasic acids, as described in German Offenlegungsschrift 1,900,270 and in U.S. Patent 3,692,744. Examples of suitable branching agents include trimesic acid, pyromellitic acid, trimethylolpropane and ethane, and pentaerythritol. It is advisable to use no more than 1 mol percent of branching agent, based on the quantity of acid component. The polyesters may also contain known monofunctional compounds such as phenol or benzoic acid as chain terminators.

The intrinsic viscosity characterizing the suitable polyester resins in the practice according to the invention should preferably be in the range of 0.4 to 1.4 grams per deciliter and, more preferably, between 0.4 and 1.2 grams per deciliter, as measured using a solution of 0.1 g of resin per 25 ml of a 1:1 mixture of trifluoroacetic acid and dichloroethane at 30°C.

Methods for the preparation of the polyester resin suitable in the present context are known and have been described in U.S. Patents 2,465,319 and 3,047,539.

The composition of the invention may include crystallization rate promoters for the polyester (such as oligomeric polyesters) to allow lower mold temperatures and shorter injection cycles. Suitable promoters have been taught in U.S. Patent 4,223,113.

Preferred oligomeric polyesters are those which are derived from the following acids and alcohols: di- and tricarboxylic acids, adipic acid, azelaic acid, citric acid $C(OH)(COOH)(CH_2COOH)_2$, fumaric, maleic acid $HOOCHC = CHCOOH$, glutaric acid, phthalic, isophthalic, terephthalic acid, trimellitic acid, trimesitinic acid, succinic acid, tartaric acid $HOOC(CHOH)_2COOH$ sebacic acid, monocarboxylic acids, cresotoic acid, salicyclic acid, acetic acid, isobutyric acid, caproic acid, caprylic acid, pelargonic acid, 2-ethylhexanoic acid, lauric acid, myristic acid, palmitic acid, stearic acid, oleic acid $CH_3(CH_2)_7CH = CH(CH_2)_7COOH$, ricinolic acid $CH_3(CH_2)_3CH(OH)CH_2CH = CH(CH_7COOH)$, 2-ethylbutyric acid, behenic acid, benzoic acid, abictic acid, 2-phenylbutyric acid, tall oil, fatty acid, di- and higher functional alcohols, ethylene glycol, propane diol 1,3/1,2,buranediol 1,3/1,4,pentanediol 1,5,hexanediol 1,6,dipropylene glycol 1,3/1,2,diethylene glycol, triethylene glycol, tetraethylene glycol, polyethylene glycol $\overline{M}_n$ 400, neopentyl glycol $HO—CH_2—C(CH_3)_2—CH_2OH$, glycerol $HOCH_2—CHOH—CH_2OH$, trimethylolethane $CH_3C(CH_2OH)_3$, trimethylolpropane $C_2H_5C(CH_2OH)_3$, pentaerythritol $C(CH_2OH)_4$, 2,2,4-trimethyl-1, 3-pentanediol, sucrose, monofunctional alcohols, 2-ethylhexanol, isonol, tertiary butanol, methanol, isopropanol

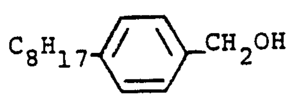

,

octylbenzyl alcohol, butyl alcohol, isobutyl alcohol, 2-ethylhexanol, isononyl alcohol, n-octyl alcohol, isooctyl alcohol, n-decyl alcohol, isodecyl alcohol, butoxyethyl alcohol $CH_3(CH_2)_3—O(CH_2)_2OH$, butoxyethyl-oxyethyl alcohol $CH_3(CH_2)_3—O(CH_2)_2O(CH_2)_2OH$, cyclohexylalcohol,

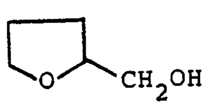

,

n-hexyl alcohol, tetrahydrofurfuryl alcohol, 2-butoxyethyl alcohol $CH_3—CH—(OCH_2CH_2OH)—CH_2CH_3$, ethyl alcohol, amyl alcohol, n-undecyl alcohol, tridecyl alcohol, butylbenzyl alcohol, methylcyclohexyl alcohol, methoxyethyl alcohol, benzyl alcohol, allyl alcohol $CH_2 = CH—CH_2OH$, hydrobietyl alcohol.

Especially preferred oligomer polyester promoters are those using adipic acid or sebacic acid as the dicarboxylic acid, 2-ethylhexane-1,3-diol, 2,2,4-trimethylpentane-1,3-diol, butane-1,3-diol, hexane-1,6-diol or butane-1,4-diol as the diol component and 2-ethylhexanol, 3,5,5-trimethylhexanol or n-butanol as the monohydric alcohol component.

Particularly suitable oligomers are poly(butane-1,3-diol adipate), poly-(hexane-1,6-diol adipate) and poly-(butane-1,4-diol adipate).

The polycarbonate resins useful in the practice of the invention are homopolycarbonates, copolycarbonates and terpolycarbonates or mixtures thereof. The polycarbonates generally have molecular weights of 10,000—200,000 (weight average molecular weight) preferably 20,000—80,000, and are additionally characterized by their melt flow of 1—24 gm/10 min at 300°C per ASTM D-1238. These polycarbonates may be prepared, for example, by the known diphasic interface process from phosgene and dihydroxy compounds by polycondensation (see German OS 2,063,050; 2,053,052; 1,570,703; 2,211,956; 2,211,957 and 2,248,817 and French Patent 1,561,518 and the monograph, H. Schnell, *Chemistry and Physics of Polycarbonates,* Interscience Publishers, New York, 1964.

In the present context, dihydroxy compounds suitable for the preparation of the polycarbonates of the invention conform to the structural formulae (1) or (2)

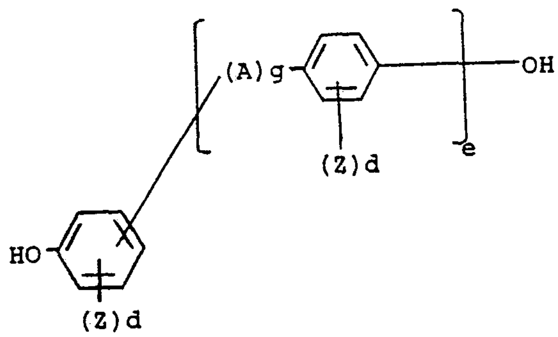

(1)

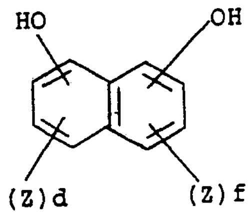

(2)

wherein

A denoted an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom; S, —SO— or —$CO_2$— radical; a radical of the general formula

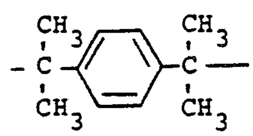 or 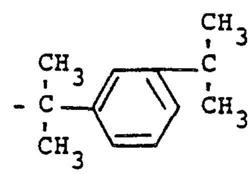

g denotes the number 0 or 1;

e denotes the number 0 or 1;

Z denotes F, Cl, Br or a $C_1$—$C_2$ alkyl and if several Z radicals are substituents in one aryl radical, they may be identical or different;

d denotes 0 or an integer of from 1 to 4; and

f denotes 0 or an integer of from 1 to 3.

Among the useful dihydroxy compounds in the practice of the invention are hydroquinone, resorcinol, bis-(hydroxyphenyl)-alkanes, bis-(hydroxyphenyl)-cycloalkanes, bis-(hydroxyphenyl)-ethers, bis-(hydroxyphenyl)-ketones, bis-(hydroxyphenyl)-sulfoxides, bis-(hydroxyphenyl)-sulfones and α,α-bis-(hydroxyphenyl)-diisopropyl-benzenes. These and further suitable aromatic dihydroxy compounds are described, for example, in U.S. Patents 3,028,365; 2,999,835; 3,148,172; 2,991,273; 3,271,367; and 2,999,846 in German Offenlegungsschriften (German Published Specifications) 1,570,703; 2,063,050; 2,063,052; 2,211,956 and in French Patent Specification 1,561,418 and in the monograph, H. Schnell, *Chemistry and Physics of Polycarbonates,* Interscience Publishers, New York, 1964. Further examples of suitable dihydroxy compounds are 2,2-bis-(4-hydroxyphenyl)-propane (bis-phenol A), 2,4-bis-(4-hydroxyphenyl)-2-methylbutane, 1,1-bis-(4-hydroxyphenyl)-cyclohexane, α,α-bis-(4-hydroxyphenyl)-p-diisopropylbenzene, 2,2-bis-(3-chloro-4-hydroxyphenyl)-propane, hydroxybenzophenone and 4,4'-sulfonyl diphenol.

The most preferred dihydroxy compound is 2,2-bis-(4-hydroxyphenyl)-propane (bisphenol A).

The polycarbonates of the invention may entail in their structure, units derived from one or more of the suitable dihydroxy compounds.

The preparation of polycarbonate resins may be carried out in accordance with any of the processes known in the art, for example, by the interfacial polycondensation process, polycondensation in a homogeneous phase or by transesterification.

The suitable processes and the associated reactants, catalysts, solvents and conditions are known in the art and have been described, inter alia, in the monograph by H. Schnell cited above.

In the preparation of the polycarbonate resins of the invention, monofunctional reactants such as monophenols including 2,6-dimethylphenol, p-tert-butylphenol or 4-(1,1,3,3-tetramethylbutyl)-phenol, may be used in order to limit their respective molecular weights. Also, branching agents may be employed.

Branching may be obtained by the incorporation of small amounts, preferably of between about 0.05 and 2.0 mol percent (relative to diphenols employed), of trifunctional or more than trifunctional compounds, especially compounds having three or more phenolic hydroxyl groups. Polycarbonates of this type are described, for example, in German Offenlegungsschriften (German Published Specifications) 1,570,533; 1,595,762; 2,116,974 and 2,113,347, British Specification 1,079,821 and U.S. Patent 3,544,514.

Some examples of compounds with three or more than three phenolic hydroxyl groups which can be used are phloroglucinol, 4,6-dimethyl-2,4,6-tri-(4-hydroxyphenyl)-heptane, 2,4,6-trimethyl-2,4,6-tri-(4-hydroxyphenyl)-heptane, 1,4,5-tri-(4-hydroxyphenyl)-benzene, 1,1,1-tri-(4-hydroxyphenyl)-ethane, tri-(4-hydroxyphenyl)-phenylmethane, 2,2-bis[4,4-bis-(4-hydroxyphenyl)-cyclohexyl]-propane, 2,4-bis-(4-hydroxyphenylisopropyl)-phenol, 2,6-bis-(2,hydroxy-5'-methylbenzyl)-4-methylphenol, 2-(4-hydroxyphenyl)-2-(2,4-dihydroxyphenyl)propane, hexa(4-(4--hydroxyphenylisopropyl)-phenyl)ortho-terephthalic acid ester, tetra-(4-hydroxyphenyl)methane, tetra-(4-(4-hydroxyphenylisopropyl)-phenoxy)methane and 1,4-bis((4',4''-dihydroxy-triphenyl)-methyl)benzene. Some of the other trifunctional compounds are 2,4-dihydroxybenzoic acid, trimesic acid, cyanuric chloride and 3,3-bis-(4-hydroxyphenyl)-2-oxo-2,3-dihydroindole.

Among the resins suitable in the practice of the invention are included phenolphthalein based polycarbonate, copolycarbonates and terpolycarbonates such as are described in U.S. Patents 3,036,036 and 4,210,741.

Graft Modified Rubber

In the context of the invention, the graft modified rubber is characterized in that its glass transition temperature is below 10°C, preferably below 0°C and further, in that its rubber elastic core comprises at least substantially of polybutadiene or a copolymer thereof.

In these grafts, a monomer mixture phase of styrene or methylmethacrylate or mixtures thereof or mixtures of either of the above with acrylonitrile is graft polymerized onto a rubber. In principle, any rubber may be used as the graft backbone so long as its properties meet the glass transition criteria set out above. Crosslinking of the core is an optional feature of the graft modified rubber.

Particularly suitable rubbers are polybutadiene, butadiene/styrene copolymers having up to 30% by weight of copolymerized styrene, copolymers of butadiene and acrylonitrile with up to 20% by weight of acrylonitrile, copolymers of butadiene with up to 20% by weight of a lower alkyl ester of an acrylic or a methacrylic acid (for example, methylacrylate, ethylacrylate, methylmethacrylate and ethylmethacrylate).

The weight ratio of rubber to graft polymerized monomer is generally within the range of from 85:15 to 40:60. The impact modifying graft is present in the molding composition in the form of particles having an average size of from about 0.1 to about 5 microns.

In regard to the grafts based on butadiene and its copolymers, these have been described in U.S. Patents 3,238,275 and in 3,919,353.

Essentially, the molecules of acrylonitrile butadiene-styrene (ABS) graft polymers which are among the preferred embodiments of the invention, consist of two or more polymeric parts of different compositions chemically united. The graft polymers may be prepared by polymerizing at least one conjugated diene, such as butadiene, or a conjugated diene with a monomer polymerizable therewith, such as mentioned above to provide a backbone, with subsequent polymerization of at least one and preferably two, grafting monomers, in the presence of the prepolymerized backbone to complete the graft polymer.

The backbone, as mentioned, is preferably a conjugated diene polymer or copolymer such as polybutadiene, butadiene-styrene or butadiene-acrylonitrile.

A specific conjugated diene monomer which may be utilized in preparing the backbone of the graft polymer is generically described by the formula:

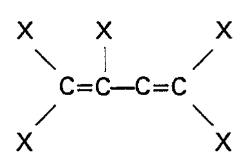

wherein X may be selected from the group consisting of hydrogen, alkyl groups containing from 1 to 5 carbon atoms, chloro and bromo. Examples of dienes that may be used are butadiene; isoprene; 1,2-heptadiene; methyl-1,3-pentadiene; 2,3-dimethyl-1,3-butadiene; 1,3-pentadiene; 2-methyl-3-ethyl-1,3-butadiene; 2-ethyl-1,3-pentadiene; 1,3- and 2,4-hexadiene, chloro- and bromo-substituted butadienes such as dichlorobutadiene, bromobutadiene, chloroprene, dibromobutadiene and mixtures thereof. The preferred conjugated diene utilized herein is butadiene.

The first monomer or group of monomers polymerized in the presence of the prepolymerized backbone are preferably monovinyl aromatic hydrocarbons. Among the monovinyl aromatic monomers are those generically described by the formula:

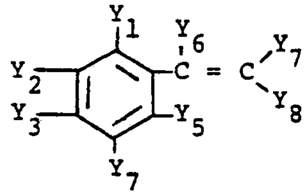

wherein $Y_1$—$Y_7$ independently may be selected from the group consisting of hydrogen, alkyl groups containing from 1 to 5 carbon atoms, chloro and bromo. Examples of the preferred monovinyl aromatic compounds and substituted monovinyl aromatic compounds that may be used are styrene and other vinyl-substituted aromatic compounds including alkyl-, cycloalkyl-, aryl, alkaryl-, aralkyl-, alkoxy-, arloxy- and other substituted vinyl aromatic compounds. Other suitable monomers include 4-methylstyrene; 3,5-diethylstyrene and 4-n-propylstyrene, α-methylstyrene, α-methylvinyltoluene, α-chlorostyrene, vinyl-toluene, α-bromostyrene, chlorophenylethylenes, dibromophenylethylenes, tetrachlorophenylethylenes, 1-vinylnaphthalene, 2-vinylnaphthalene, mixtures thereof and the like. The preferred monovinyl aromatic hydrocarbon used herein is styrene and/or α-methylstyrene.

The second group of monomers that are polymerized in the presence of the prepolymerized backbone are acrylonitrile, substituted acrylonitrile and/or acrylic acid esters exemplified by acrylonitrile and alkyl acrylates such as methylmethacrylate. The acrylonitrile, substituted acrylonitrile or acrylic acid esters are described generically by the formula:

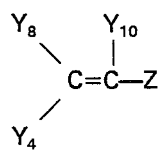

wherein $Y_8$—$Y_{10}$ independently may be selected from the group consisting of hydrogen, alkyl groups containing from 1 to 5 carbon atoms, chloro and bromo and Z is selected from the group consisting of cyano and carbalkoxy wherein the alkyl group of the carbalkoxy group contains from 1 to about 12 carbon atoms. Examples of monomers of this description, i.e. acrylonitrile, substituted acrylonitrile or acrylic acid esters of the above formula are acrylonitrile, α-chloroacrylonitrile, β-chloroacrylonitrile, α-bromo-acrylonitrile, and β-bromoacrylonitrile, methylacrylate, methylmethacrylate, ethylacrylate, butylacrylate, propylacrylate, isopropylacrylate, isobutylacrylate, mixtures thereof and the like. The preferred acrylic monomer used herein is acrylonitrile and the preferred acrylic acid esters are ethyl acrylate and methyl methacrylate.

In preparing the graft polymer of this invention, a certain percentage of the polymerizing monomers that are grafted on the backbone will occur as free copolymer. If styrene is utilized as one of the grafting monomers and acrylonitrile as the second grafting monomer, a certain portion of the composition will occur as styrene acrylonitrile copolymer. In certain instances, one of the first group, i.e. monovinyl aromatic monomers such as α-methylstyrene (or other monomer) is copolymerized with one of the second group, i.e. acrylonitrile, substituted acrylonitrile, etc., and a certain percentage of the composition is comprises of, for example, and α-methylstyrene acrylonitrile copolymer (or other copolymer). It is contemplated in this invention that the composition referred to as graft polymer contain up to 90% copolymer existing either as free copolymer from the preparation of the graft or as an added copolymer component. These added copolymers are preferably materials having high heat distortion temperatures such as is the case when α-methylstyrene acrylonitrile copolymers are added.

Graft polymers suitable in the present context may be prepared by bulk-, bulk suspension-, emulsion- or emulsion suspension-polymerization, descriptions of which processes are provided in U.S. Patents 3,751,526, 3,758,640, 3,981,944, 3,950,455 and 3,852,393.

Graft polymers suitable in the present context are known in the art as, for instance, ABS and MBS. ABS resins are available in commerce from, among others, Bayer AG of Leverkusen, West Germany and from Dow Chemical Corporation. MBS is available, for instance, under the trade name Acryloid KM-653 from Rohn and Haas Company.

Talc, a magnesium silicate, is a mineral well known in the art. Exemplifying the many talc products that are suitable in the present context is MP—12—50, a product of Pfizer Corporation. The chemical composition and physical properties of that suitable talc are listed below.

Chemical Composition

| | |
|---|---|
| $SiO_2$ | 61.3% |
| MgO | 31.1% |
| CaO | 0.2% |
| $Al_2O_3$ | 1.5% |
| $Fe_2O_3$ | 0.9% |
| CaO-max | 0.5% |
| L.O.I. | 6.0% |

Physical Properties (typical)

| | |
|---|---|
| Specific gravity | 2.70 |
| Weight per solid gal-lb | 22.49 |
| One pound bulks-gal | 0.04446 |
| Loose density-lb/ft$^3$ | 6.7 |
| g/cc | .11 |
| Tapped density-lb/ft$^3$ | 22.6 |
| g/cc | .36 |
| Retention-325 mesh | nil |
| Dry brightness | 92 |
| Oil Absorption | 50 |
| pH value | 8.8 |
| Hegman fineness | 6.0+ |

In the context of the present invention, thermoplastic molding compositions are prepared comprising a blend of

(i) an aromatic polycarbonate resin,

(ii) polyethylene terephthalate,

(iii) a graft modified rubber, and

(iv) an additive amount of finely divided talc sufficient to control the warpage of articles molded therefrom yet have no substantial effect on the level of their impact strength.

Preferably, compositions in the context of the invention comprise blends containing 30 to 89.5% poly(ethylene terephthalate), 5 to 61.5% of the polycarbonate resin, 5 to 50% of the graft modified rubber and 0.1 to about 4.5% of talc. In a more preferred embodiment, the respective ranges are 35 to 80% polyethylene terephthalate, 9 to 40% polycarbonate, 8 to 40% graft modified rubber and 0.5 to 3.5% talc, in all cases the percents are in relation to the weight of the blend.

In the preparation of the composition it is very important to make certain that the ingredients are substantially free of moisture, the adverse effects of water vapour upon the processing of thermoplastic poly(ethylene terephthalate) generally and polycarbonate resins in particular being well recognized in the art. Although it is not essential, best results are obtained upon precompounding of the ingredients, followed by pelletizing and then molding, all of which procedures are well known in the art.

The examples below are intended as an illustration of the invention.

## EXAMPLES

Compositions in accordance with the invention were prepared and their properties determined as summarized below. The compositions were all based on batches, the common components of which were:

*PET*, available as Vituf VFR 5041 from Goodyear Chemical — a poly(ethylene terephthalate) characterized by its intrinsic viscosity of 1.04 dl/gm determined using a solution of 0.1 gm of resin in 25 ml of a 1:1 mixture of trifluoroacetic acid and dichloromethane at 30°C.

*Polycarbonate*, available as Merlon M—50 from Mobay Chemical Corporation, is a homopolycarbonate derived from bisphenol A, phenol and phosgene, characterized in that its relative viscosity is 1.322 as measured on a 0.5% solution in dichloromethane at 25°C.

*Graft Copolymer I* used in Compositions 1—5), an ABS copolymer characterized in that its polybutadiene content is 80% by weight and in that its S/AN ratio is about 72/28 and in that its glass transition temperature is below about −65°C available from Bayer AG.

*Graft Copolymer II* (used in Compositions 6—7), an MBS copolymer characterized in that its polybutadiene content is about 70% by weight and in that its glass transition temperature is well below 0°C available as Acryloid KM—653 from Rohn & Haas Company, Philadelphia, Pennsylvania.

The actual quantities of the individual components were 1.360 kg of PET, 1.134 kg of polycarbonate and 0.680 kg of the graft copolymer (either I or II).

To these basic components were added in each case 17 gms of an antioxidant octadecyl-3-(3',5'-di-tert-butyl-4'-hydroxyphenyl)-propionate, and 17 gms of a stabilizer: tris-[(3-ethoxetanyl-3)methyl]phosphite.

The talc used in the preparation of the compositions was MP12—50 available from Pfizer Corporation.

The components were all dried and then tumble blended prior to compounding. Extrusion was carried out on an extruder with the compression ratio of 2.75/1, at the following conditions:

| | Zone set temperature (°C): |
|---|---|
| Rear | 270°C |
| Middle | 265°C |
| Front | 270°C |
| Die | 234°C |
| Screw speed | 80 rpm |
| Screw set | 57 |
| Screen Pack | 20—40—60 |

Extruded pellets, after drying at about 110°C for about 16 hours in a hot air circulating oven, were injection molded to prepare test bars. The injection molding conditions were as follows:

| | Zone set temperature (°C): | |
|---|---|---|
| Rear | 260°C | |
| Front | 260°C | |
| Nozzle | 254°C | |
| Mold Surface | 70°C | |
| Melt temperature (°C): | 260 | |
| Cycle time (seconds): | Injection | 12 |
| | Cooling | 25 |
| | Total cycle | 37 |
| Injection pressure (MPa): | Primary | 5835 |
| | Secondary | 5492 |

TABLE 1

| | 1 | 2 | 3 | 4 | 5[4] | 6[5] | 7[5] |
|---|---|---|---|---|---|---|---|
| Talc (%)[1] | — | 2.14 | 3.21 | 4.28 | 6.42 | 2.14 | 3.21 |
| Impact strength (J/m) at 23°C[2] | 731.6/ 747.6 | 646.1/ 710.2 | 704.9/ 843.7 | 309.7/ 480.6 | 170.9/ 256.3 | 731.6/ 683.5 | 752.9/ 672.8 |
| After heating | 672.8/ 688.9 | 507.3/ 598.1 | 518.0/ 576.7 | 165.5/ 208.2 | 106.8/ 133.5 | 683.5/ 667.5 | 646.1/ 624.8 |
| Warpage[3], mm | 1.7 | 1.2 | 0.7 | 0.6 | 1.2 | 1.6 | 0.4 |

(1) Relative to the total weight of PET, polycarbonate and graft copolymer.

(2) Notched Izod, specimens 3 x 12.7 x 127 mm; the values are given as gate/end sides; heating was carried out at 130°C for 30 minutes.

(3) Specimens 3 x 12.7 x 127 mm, after heating for 30 minutes at 130°C.

(4) Composition No. 5 is indicated to be inferior insofar as its impact performance is considerably lower than any of the other compositions.

(5) Compositions entailing Acryloid KM—653, an MBS copolymer.

In considering the advance represented by the findings summarized above, it is worthwhile to note that in similar compositions wherein graft copolymer was based on an acrylate rubber (Acryloid KM 330 from Rohm & Haas), the addition of talc had an adverse effect on the degree of warpage.

| Composition | 8 | 9 | 10 |
|---|---|---|---|
| Talc (%) [1] | 0.53 | 2.14 | 3.21 |
| Impact strength J/m at 23°C[2] as molded | 817/687 | 833/705 | 908/769 |
| After heating | 854/673 | 780/673 | 785/694 |
| Warpage (mm)[3] | 0.1 | 0.5 | 0.6 |

[1] Relative to the total weight of PET, polycarbonate and graft copolymer.

[2] Notched Izod, specimens 3 x 12.7 x 127 mm; the values are given as gate/end sides; heating was carried out at 130°C for 30 minutes.

[3] Specimens 3 x 12.7 x 127 mm, after heating for 30 minutes at 130°C.

**Claims**

1. A thermoplastic moulding composition comprising a blend of
(i) 30 to 89.5% of a high molecular weight thermoplastic poly-(ethylene terephthalate) resin,
(ii) 5 to 61.5% of a high molecular weight thermoplastic aromatic polycarbonate resin,
(iii) 5 to 50% of a graft modified butadiene based rubber having a glass transition temperature below about 10°C, and
(iv) 0.1 to 4% of talc,
said percentages being relative to the weight of said blend, with the proviso that the composition does not include polybutylene terephthalate resins and polyethylene terephthalate/polybutylene terephthalate block copolyesters.

2. The composition of Claim 1 wherein said rubber is a butadiene copolymer.

3. The composition of Claims 1 and 2, wherein
(ii) is a bisphenol A based polycarbonate, and
(iii) has a polybutadiene core and a styrene/acrylonitrile graft.

4. The composition of Claims 1—3 wherein
(iii) is a methyl methacrylate/butadiene/styrene terpolymer.

**Patentansprüche**

1. Thermoplastische Formmasse enthaltend eine Mischung aus
(i) 30 bis 89.5% eines hochmolekularen thermoplastischen Polyethylenterephthalatharzes,
(ii) 5 bis 61.5% eines hochmolekularen thermoplastischen aromatischen Polycarbonatharzes,
(iii) 5 bis 50% eines pfropfmodifizierten Kautschuks auf Butadienbasis mit einer Glasübergangstemperatur von unter etwa 10°C, und
(iv) 0.1 bis 4% Talk,
wobei sich die Prozentangaben auf das Gewicht dieser Mischung deziehen, mit der Maßgabe, daß die Masse Polybutylenterephthalatharze und Polyethylenterephthalat/Polybutylenterephthalat-Blockcopolyester nicht umfaßt.

2. Masse nach Anspruch 1, worin der Kautschuk ein Butadien-Copolymerisat ist.

3. Masse nach Ansprüchen 1 und 2, worin
(ii) ein Polycarbonat auf Basis von Bisphenol A ist und
(iii) eine Polybutadiengrundlage und eine Styrol/Acrylnitril-Pfropfauflage besitzt.

4. Masse nach Ansprüchen 1—3, worin
(iii) ein Methylmethacrylat/Butadien/Styrol-Terpolymerisat ist.

**Revendications**

1. Composition thermoplastique moulable, comprenant un mélange
(i) de 30 à 89,5% d'une résine poly(éthylène-téréphtalate) thermoplastique de haut poids moléculaire,
(ii) de 5 à 61,5% d'une résine polycarbonate aromatique thermoplastique de haut poids moléculaire,
(iii) de 5 à 50% d'un caoutchouc à base de butadiène modifié greffé ayant une température de transition vitreuse inférieure à environ 10°C, et
(iv) de 0,1 à 4% de talc,
lesdits pourcentages étant relatifs au poids dudit mélange, sous réserve que la composition ne renferme pas de résines poly(butylènetéréphtalate) et de copolyesters séquencés poly(éthylènetéréphtalate)/poly(butylènetéréphtalate).

2. Composition suivant la revendication 1, dans laquelle le caoutchouc est un copolymère de butadiène.

3. Composition suivant les revendications 1 et 2, dans laquelle
(ii) est un polycarbonate à base de bisphénol A, et
(iii) a un noyau de polybutadiène et un greffon styrène/acrylonitrile.

4. Composition suivant les revendications 1—3, dans laquelle
(iii) est un terpolymère méthacrylate de méthyle/butadiène/styrène.